# EUROPÄISCHE PATENTSCHRIFT

(11) **EP 1 600 376 B1**
(45) Veröffentlichungstag und Bekanntmachung des Hinweises auf die Patenterteilung: **30.07.2008**
(21) Anmeldenummer: 05011211.9
(22) Anmeldetag: 24.05.2005
(51) Int. Cl.: B64D 11/06, B60N 2/68

(54) **Zweiholmerchassis für Fluggastsitz**
Two-holm-frame for aircraft passenger seat
Châssis à deux montants pour siège de passager d'aéronef

(30) Priorität: 27.05.2004 DE 102004025982; 03.08.2004 US 598266 P
(43) Veröffentlichungstag der Anmeldung: 30.11.2005
(73) Patentinhaber: Airbus Deutschland GmbH, 21129 Hamburg (DE)
(72) Erfinder: Schumacher, Markus, 21614 Buxtehude (DE); Muin, Andrew, 21698 Harsefeld (DE)
(74) Vertreter: Maiwald Patentanwalts GmbH

(56) Entgegenhaltungen:
- WO-A-00/16661
- DE-A1- 1 554 003
- GB-A- 1 365 422
- US-A- 3 316 013
- US-B1- 6 669 143

## Beschreibung

Die vorliegende Erfindung betrifft ein Chassis für einen Fluggastsitz, insbesondere für eine Passagierkabine eines Flugzeuges, insbesondere betrifft die vorliegende Erfindung ein Chassis für einen Sitz für ein Flugzeug und ein Chassis für eine Sitzgruppe für ein Fahrzeug mit entsprechendem Sitz. Sowie ein Verfahren zur Herstellung eines Chassis für einen Fluggastsitz.

Fluggastsitze bestehen aus einem Gestell, auf dem Funktionskomponenten, wie Sitzfläche, Rückenlehne und Armlehne untergebracht sind. Solche Fluggastsitze können als Klappsitze mit schwenkbaren Sitzflächen und Rückenlehnen ausgestattet sein. Üblicherweise sind an den Fluggastsitzen zusätzliche Komponenten für zusätzliche Aufgaben, wie z. B. Mechaniken für Klappsitze, Gelenke, Lager, Gepäckstützen und Fußstützen, montiert. Die Gestelle von Fluggastsitzen müssen wegen der üblichen hohen Belastung eine hohe Stabilität aufweisen. Dabei besteht die Bestrebung, eine möglichst leichte Bauweise einzusetzen. Heute kommen bei dem Bau von Chassis für Fluggastsitze Einholmträger und Doppelholmträger mit horizontalem Holmversatz zum Einsatz.

Ein solcher Fluggastsitz ist bekannt aus US-Patent 6,669,143 B1, welches den nächstliegenden Stand der Technik darstellt und den Oberbegriff des Anspruchs 1 offenbart.

Nachteilig an heute eingesetzten Gestellkonstruktionen für Fluggastsitze ist, dass sie nur unter stabilisierenden Aspekten entworfen worden sind. D. h. sie sind für das Tragen von beispielsweise Sitzen und Rückenlehnen optimiert. Bisher mussten für Aufgaben, wie Gepäckrückhalt oder Fußstützen, zusätzliche Komponenten vorgesehen werden. Dadurch entsteht ein höherer Materialbedarf und zusätzliches Gewicht. Einholmkonstruktionen haben zusätzlich noch den Nachteil, dass hohe Torsionskräfte entstehen und somit ein großes Holmprofil zum Einsatz kommen muss.

Es ist eine Aufgabe der vorliegenden Erfindung, eine leichte und kostengünstige Trägerkonstruktion für Fluggastsitze anzugeben, die eine ausreichende Stabilität liefert und die konstruktionsbedingt zusätzliche Aufgaben, wie Gepäckrückhalt oder Fußstützen, allein über die Gestaltung der Rahmenkonstruktion liefert, ohne auf zusätzliche Komponenten zurückgreifen zu müssen.

Gemäß einem Ausführungsbeispiel der vorliegenden Erfindung, wie in Anspruch 1 angegeben, wird ein Chassis für einen Fluggastsitz für ein Flugzeug angegeben, das zumindest zwei erste Seitenteile, einen ersten Holm und einen zweiten Holm umfasst. Der erste und der zweite Holm sind im Wesentlichen horizontal in den zumindest zwei ersten Seitenteilen angeordnet. Der zweite Holm ist im Fußbereich des Flugzeugsitzes ausgebildet und gewährleistet konstruktionsbedingt eine Gepäcksicherung. Gepäckrückhaltungen sind dafür vorgesehen, die in Flugrichtung wirkenden horizontalen Kräfte, die beispielsweise durch Gepäck bei starken Bremsungen auftreten können, auffangen zu können.

In vorteilhafter Art und Weise erfüllt der zweite Holm im Fußbereich neben der Stabilisierung des Chassis die Funktion eines Gepäckrückhaltes. Die Anbringung im Fußbereich erlaubt den Raum unter den Sitzen als zusätzlichen Gepäckstauraum auszunutzen. Da üblicherweise in den Passagierkabinen der Platz für die Unterbringung von mitgeführten Gegenständen begrenzt ist, kann es von Vorteil sein, auf einen zusätzlichen Gepäckstauraum zurückgreifen zu können. In bekannten Konstruktionen müssen für Gepäckrückhalte zusätzliche Anbauelemente vorgesehen werden.

Gemäß einem weiteren vorteilhaften Ausführungsbeispiel der vorliegenden Erfindung, wie in Anspruch 2 angegeben, ist ein mindestens zweites Seitenteil vorgesehen. Dieses zumindest eine zweite Seitenteil gibt der Chassiskonstruktion eine zusätzliche stabilisierende Wirkung. Üblicherweise ist dieses zumindest eine zweite Seitenteil nicht mit den Sitzschienen am Passagierraumboden verankert. Durch das zumindest eine zweite Seitenteil wird verhindert, dass die horizontalen Holme sich gegeneinander verschieben können. Sind die beiden horizontal angeordneten Holme zusätzlich in vertikaler Richtung versetzt angeordnet, bewirkt das zumindest eine zweite Seitenteil, dass, bei Belastung des in diesem Fall höher angebrachten Holmes, Druckkräfte über das zumindest eine Seitenteil in Druckkräfte auf den unteren der beiden Holme umgewandelt werden. Holme können als Rohre ausgebildet sein. Rohre haben die Eigenschaft, dass sie sehr stabil für die Aufnahme von Druckkräften bei gleichzeitig geringem Materialaufwand sind. Durch gezielte Profilierung, insbesondere Fräsungen, kann der Materialaufwand noch weiter reduziert werden. Außerdem ermöglicht diese Konstruktion die Verwendung von leichteren Materialien, wie z. B. Aluminium. Da die Stabilität einer solchen fachwerkartigen Konstruktion mit zunehmendem Abstand zwischen den beiden Holmen zunimmt, kann in vorteilhafter Art und Weise durch einen vertikalen Versatz der Holme erreicht werden, dass bei einem großen Abstand der beiden Holme ein geringer horizontaler Raumbedarf vonnöten ist. Dies ist insbesondere bei Flugzeugen ein Vorteil, bei denen es darum geht, auf geringer Fläche möglichst viele Fluggastsitze unterzubringen.

Gemäß einem weiteren Ausführungsbeispiel der vorliegenden Erfindung, wie in Anspruch 3 angegeben, kann der erste Holm zur Lagerung einer Sitzfläche ausgestaltet sein. In vorteilhafter Art und Weise bietet somit ein Teil der Rahmenkonstruktion den Anschlag und die Auflage einer Sitzfläche, ohne dafür zusätzliche Komponenten vorsehen zu müssen.

Gemäß einem weiteren Ausführungsbeispiel der vorliegenden Erfindung, wie in Anspruch 4 angegeben, ist zumindest ein Anschlag zur Lagerung einer Sitzfläche vorgesehen. In vorteilhafter Art und Weise entsteht dadurch eine hohe Gestaltungsfreiheit bei der Anordnung einer Sitzfläche. Ein Anschlag für eine Sitzfläche kann mit einem relativ geringen Materialaufwand erstellt werden.

Gemäß einem weiteren Ausführungsbeispiel der vorliegenden Erfindung, wie in Anspruch 5 angegeben, ermöglicht der zweite Holm im Fußbereich die Ausgestaltung einer Fußstütze. Wird der zweite Holm nicht in seiner Funktion als Gepäckrückhaltestange verwendet, kann er einer Person, die hinter dem Flugsitz sitzt, die Möglichkeit bieten, eine bequeme Sitzposition mit auf die Fußstütze gestreckten Beinen einzunehmen. Aufgrund der tragenden Funktion des zweiten Holmes kann er bezüglich seiner Stabilität so ausgelegt sein, dass er ohne zusätzliches Gewicht die Funktion einer Fußstütze ohne weiteres liefern kann.

Gemäß einem weiteren Ausführungsbeispiel der vorliegenden Erfindung, wie in Anspruch 6 angegeben, sind die zumindest zwei ersten Seitenteile aus einem ersten hinteren Trägerteil und einem ersten vorderen Trägerteil gestaltet. In den Trägerteilen befinden sich Aufnahmen für z. B. den ersten und den zweiten Holm. In vorteilhafter Art und Weise lässt sich so die sog. Splitline derart gestalten, dass ein Montageprozess erheblich vereinfacht werden kann.

Gemäß einem weiteren Ausführungsbeispiel der vorliegenden Erfindung, wie in Anspruch 7 angegeben wird eine Sitzgruppe für ein Flugzeug angegeben, umfassend zumindest zwei Sitze, zumindest zwei erste Seitenteile und zumindest zwei Holme, wobei die zumindest zwei Holme zwei Seitenteile stabilisieren und wobei der zweite Holm im Fußbereich der Sitzgruppe ausgebildet ist, um eine Gepäcksicherung zu gewährleisten. Beispielsweise kann das Fahrzeug ein Flugzeug sein. In vorteilhafter Art und Weise erspart die Bereitstellung der Funktion der Gepäcksicherung durch den zweiten Holm, dass zusätzliche Komponenten, die ein zusätzliches Gewicht bedeuten würden, eingesetzt werden müssen. Außerdem kann diese Funktion für alle Sitze der Sitzgruppe von einer durchgängigen Komponente bereitgestellt werden. Einer der Holme unternimmt also neben der Haltefunktion für die Seitenteile des Chassis auch noch die Funktion der Gepäckrückhaltung.

Gemäß einem weiteren vorteilhaften Ausführungsbeispiel der vorliegenden Erfindung ist ein Flugzeug angegeben, das ein Chassis für einen Fluggastsitz gemäß der vorliegenden Erfindung oder eine Sitzgruppe gemäß der vorliegenden Erfindung aufweist. In vorteilhafter Art und Weise kann solch ein Flugzeug ein verringertes Gewicht aufweisen.

Anspruch 8 der vorliegenden Erfindung betrifft ein Flugzeug mit zumindest einem Chassis für einen Fluggastsitz oder mit zumindest einer Sitzgruppe gemäß der vorliegenden Erfindung.

Gemäß einem weiteren Ausführungsbeispiel der vorliegenden Erfindung, wie in Anspruch 9 angegeben, wird ein Verfahren zur Herstellung eines Chassis für einen Fluggastsitz angegeben. Durch die besondere vertikale Lage der Holme, lässt sich die sog. Splitline derart anordnen, dass hierdurch Montagevorteile entstehen können. Die Holme werden zwischen Teilen der Seitenteile gehalten.

Im Folgenden werden vorteilhafte Ausführungsbeispiele der vorliegenden Erfindung mit Verweis auf die folgenden Figuren beschrieben.
Fig. 1 zeigt eine dreidimensionale Teil-Seitenansicht eines Ausführungsbeispiels eines Chassis für einen Fluggastsitz für ein Flugzeug gemäß der vorliegenden Erfindung.
Fig. 2 zeigt eine dreidimensionale Seitenansicht eines Chassis für eine Sitzgruppe für Fluggastsitze für ein Flugzeug gemäß der vorliegenden Erfindung.
Fig. 3 zeigt eine vereinfachte schematisierte dreidimensionale Seitenansicht einer Sitzgruppe gemäß eines Ausführungsbeispiels der vorliegenden Erfindung.
Fig. 4 zeigt ein Flussdiagramm eines Verfahrens zur Herstellung eines Chassis für einen Fluggastsitz für ein Flugzeug gemäß der vorliegenden Erfindung.

In der vorliegenden Beschreibung werden für gleiche oder sich entsprechende Elemente die gleichen Bezugsziffern verwendet.

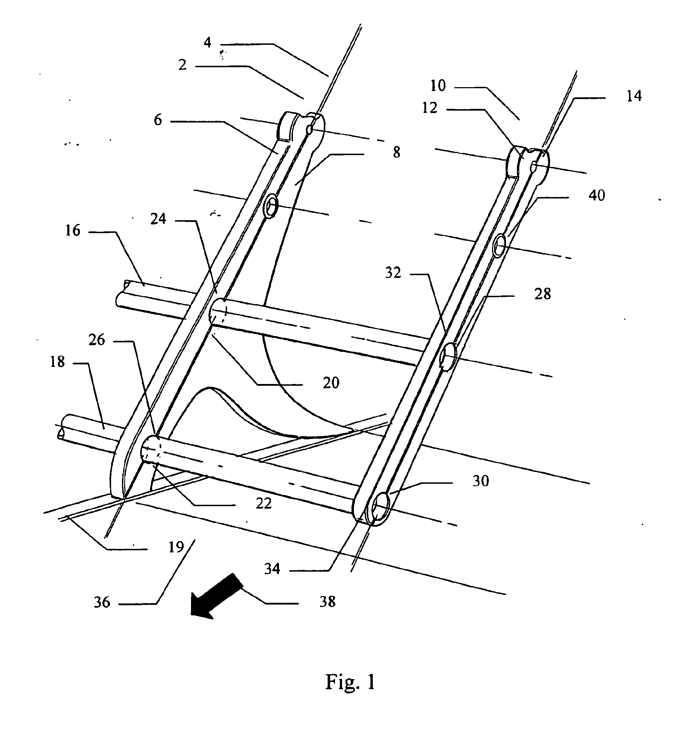

Fig. 1 zeigt eine schematisierte dreidimensionale Teil-Seitenansicht eines Ausführungsbeispiels eines Chassis für einen Fluggastsitz für ein Flugzeug gemäß der vorliegenden Erfindung. Das Chassis umfasst ein erstes Seitenteil 2, einen ersten Holm 16, einen zweiten Holm 18 und ein zweites Seitenteil 10. Das erste Seitenteil 2 besteht aus einem ersten vorderen Trägerteil 6 und einem ersten hinteren Trägerteil 8. In dem ersten hinteren Trägerteil 8 ist zumindest eine erste Aufnahme 20 und zumindest eine zweite Aufnahme 22 ausgebildet. In dem ersten vorderen Trägerteil 6 ist zumindest eine dritte Aufnahme 24 und eine vierte Aufnahme 26 ausgebildet. In dem zweiten hinteren Trägerteil 14 ist zumindest eine fünfte 28 und zumindest eine sechste 30 Aufnahme und in dem vorderen Trägerteil 12 ist zumindest eine siebte 32 und zumindest eine achte 34 Aufnahme ausgebildet. Das erste hintere Trägerteil 8 und das erste vordere Trägerteil 6 sowie das zweite hintere Trägerteil 14 und das zweite vordere Trägerteil 12 sind an einer Splitline 4 zusammengesetzt. Zwischen dem ersten hinteren Trägerteil 8 und dem zweiten vorderen Trägerteil 6 sind der erste 16 und der zweite 18 Holm fixiert. Das erste hintere Trägerteil 8 bildet gleichzeitig den Sitzfuß der Chassis-Konstruktion und kann mit der Sitzschiene 19 verankert sein. Der zweite Holm 18 ist in Flugrichtung 38 vertikal und horizontal von dem ersten Holm 16 versetzt montiert. Dadurch und durch die Verbindung mit dem zweiten Seitenteil 10 wird der Konstruktion eine fachwerkähnliche Stabilität verliehen. Kräfte, die auf den ersten Holm Richtung Passagierraumboden 36 wirken, werden über das zweite Seitenteil 10 in Druckkräfte auf den zweiten Holm 18 umgewandelt. In vorteilhafter Art und Weise kann somit für den Holm 18 eine Gewichtsersparnis durch gezielte Profilierung und ein leichteres Material, beispielsweise Aluminium, erreicht werden. Wegen seiner tiefen Einbauposition nahe des Fußraums, kann der Holm 18 als Gepäckrückhalt verwendet werden. Er muss dazu lediglich Kräfte, die in Flugrichtung 38 wirken, aufnehmen können und wegen seiner stabilen Ausbildung ist es möglich, bei Nichtbenutzung als Gepäckrückhalt, den zweiten Holm 18 als Fußstütze zu verwenden. Der erste Holm 16 kann als Anschlag oder Auflage für eine Sitzfläche, die beispielsweise an einer Schwenkachse, die in Aufnahme 40 montiert ist, befestigt werden. Die Montage weiterer Anbauteile, wie Armlehnen, Lager oder Rückstellelemente, ist an diesem Chassis möglich.

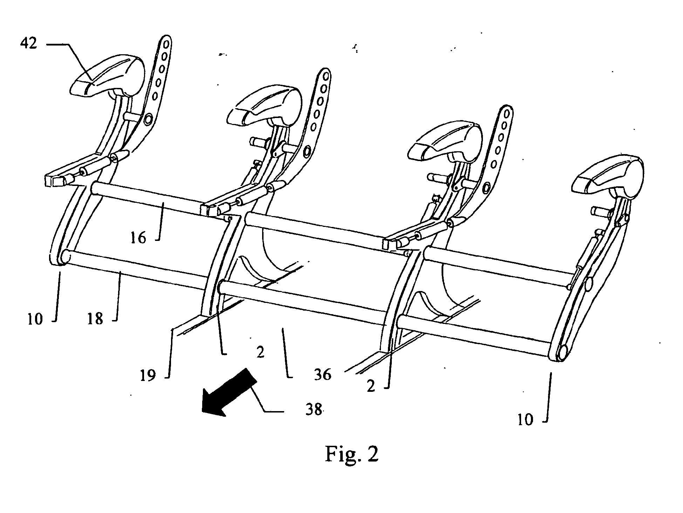

Fig. 2 zeigt eine dreidimensionale Seitenansicht eines Chassis für eine Sitzgruppe für Fluggastsitze für ein Flugzeug gemäß der vorliegenden Erfindung. Gezeigt sind ein erster Holm 16 und ein zweiter Holm 18, die in horizontaler Lage zwischen den beiden Seitenteilen 2 eingebaut sind. Der erste Holm 16 und der zweite Holm 18 bilden eine Halterung zur Stabilisierung der zumindest zwei ersten Seitenteile 2 aus. Der zweite Holm 18 bildet einen ersten Abstand zum Passagierraumboden 36 und der erste Holm 16 bildet einen zweiten Abstand zum Passagierraumboden 36, wobei der zweite Abstand größer als der erste Abstand ist. Dadurch ist der zweite Holm 18 näher im Fußraum angebracht als der erste Holm 16. Diese tiefere Lage ermöglicht es dem Holm 18, neben seiner stabilisierenden Rahmenfunktion, zusätzlich die Funktion eines Gepäckrückhaltes zu übernehmen, zum Verstauen von beispielsweise Handgepäck der Passagiere oder aber, bei Nichtbenutzung als Gepäckrückhalt, als Fußstütze für in Flugrichtung 38 hinter dem Chassis sitzenden Personen zur Ablage der Beine zu dienen. Die beiden ersten Seitenteile 2 dienen im Wesentlichen zur Abstützung und Fixierung der Konstruktion am Boden 36, wohingegen der erste Holm 16 und der zweite Holm 18 eine Halterung ausbilden, die der Stabilisierung der Konstruktion dienen. Zur weiteren Stabilisierung und zur Verteilung von Druckkräften, von z. B. einer auf dem ersten Holm 16 lagernden Sitzfläche, dienen die zweiten Seitenteile 10. An den ersten Seitenteilen 2 und an den zweiten Seitenteilen 10 können zusätzliche Komponenten, wie Armstützen 42, montiert sein. Die zweiten Seitenteile 10 können derart ausgebildet sein, dass sie keine direkte Berührung mit dem Boden 36 der Fluggastkabine aufweisen. Bei einer Sitzbank mit drei Plätzen können somit zwei erste Seitenteile 2 und zwei zweite Seitenteile 10 ausreichend sein. Da üblicherweise die ersten Seitenteile 2 in Schienen am Kabinenboden angeordnet sind, kann damit die Anordnung von zwei Schienen ausreichend für eine Dreiersitzgruppe oder sogar mehrsitzige Sitzgruppe (Fünfer-Gruppe) sein.

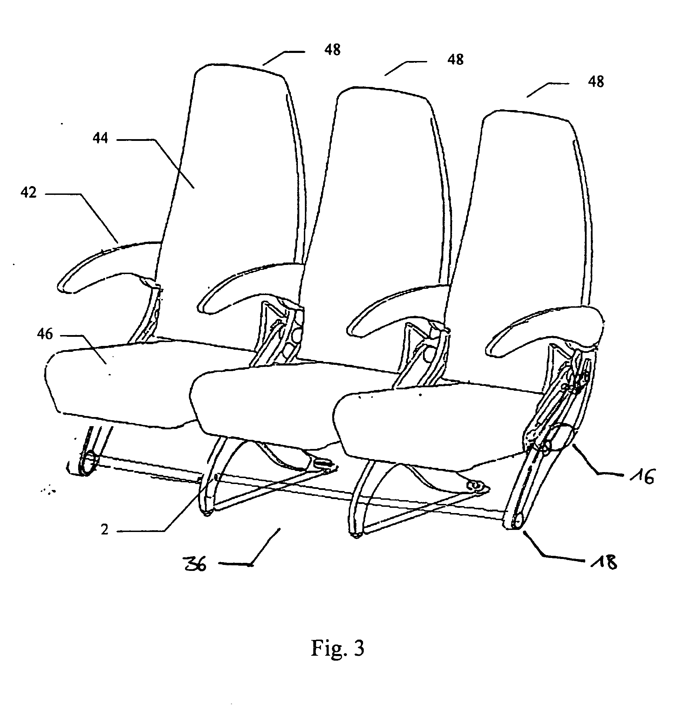

Fig. 3 zeigt eine vereinfachte, schematisierte dreidimensionale Seitenansicht einer Sitzgruppe gemäß eines Ausführungsbeispiels der vorliegenden Erfindung. In Fig. 3 sind drei Einzelsitzplätze 48 dargestellt. Die dargestellten Einzelsitze 48 umfassen eine Rückenlehne 44 und eine Sitzfläche 46. Die Sitzfläche 46 liegt auf dem ersten Holm 16 auf. Der zweite Holm 18 ist im Fußbereich als durchgängiger Holm über alle Einzelsitze ausgebildet. Somit entsteht unter den Einzelsitzen ein Raum, begrenzt durch den Passagierraumboden 36, den zweiten Holm 18 und der Sitzfläche 46, in dem Gepäck verstaut werden kann. Der Holm 18 stellt neben seiner stabilisierenden Funktion für das Chassis einen Gepäckrückhalt dar.

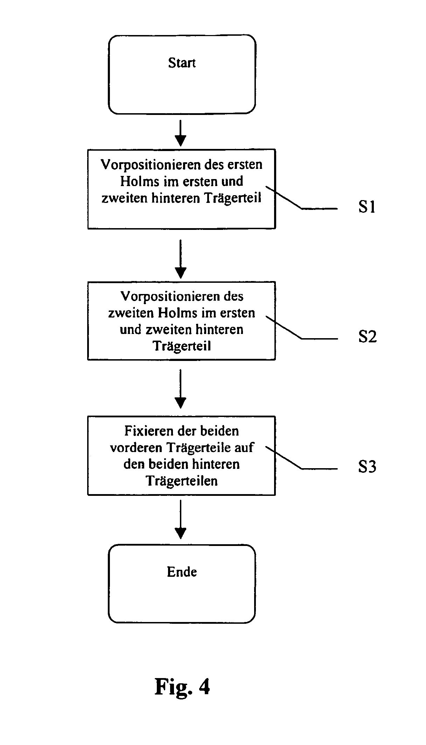

Fig. 4 zeigt ein Flussdiagramm für ein Verfahren zur Herstellung eines Chassis für einen Fluggastsitz für ein Flugzeug. Das Chassis (z.B. wie in Fig. 1 dargestellt) für einen Fluggastsitz umfasst zumindest ein erstes hinteres Trägerteil 8, umfassend eine erste und eine zweite Aufnahme 20 und 22 für einen Holm, zumindest ein erstes vorderes Trägerteil 6, umfassend eine dritte 24 und eine vierte Aufnahme 26 für einen Holm und zumindest ein zweites hinteres Trägerteil 14, umfassend eine fünfte 28 und sechste 30 Aufnahme für einen Holm und zumindest ein zweites vorderes Trägerteil 12, umfassend eine siebte 32 und achte Aufnahme 34 für einen Holm. Das Chassis umfasst darüber hinausgehend einen ersten Holm 16 und einen zweiten Holm 18. Das Verfahren umfasst die im Folgenden beschriebenen Schritte. In einem ersten Schritt S 1 wird der erste Holm 16 im ersten 8 und zweiten hinteren Trägerteil 14 in den entsprechenden Aufnahmen vorpositioniert. Um den ersten Holm 16 genau positionieren zu können und ihn gegen das Verrutschen bei der Montage zu sichern, wird er in halbmondförmige Aufnahmen 20 und 28 eingelegt. In derselben Art und Weise wird gemäß dem Schritt S2 der zweite Holm 18 in den halbmondförmigen Aussparungen 22 und 30 vorpositioniert und gegen Verrutschen gesichert. Bei der Montage wird in vorteilhafter Art und Weise ausgenutzt, dass die Holme 16 und 18 in den auf ihre Größe abgestimmten Aufnahmen 20, 28, 22 und 30 durch die Schwerkraft gehalten werden. Es ist deshalb nicht nötig, auf zusätzliches Werkzeug zurückgreifen zu müssen, das während der Montage die Komponenten zusammenhält. Die Montagezeit kann dadurch verkürzt werden. In dem abschließenden Schritt S3 werden die beiden vorderen Trägerteile 6 und 12 auf den beiden hinteren Trägerteilen 8 und 14 fixiert. Die Art und Weise und auch die Position der Fixierung kann relativ frei nach Gesichtspunkten einfachster Montage oder bester Zugänglichkeit gewählt werden. Ebenso das Verfahren. Denkbar wäre z. B. Verschraubung oder Vernietung. Der Aussparungen 20, 22, 24, 26, 28, 30, 32 und 34 können auf den Querschnitt der Holme 16 und 18 angepasst sein. Dadurch können die Aussparungen sehr dicht an den Holmen 16 und 18 anliegen. Durch den Anpressdruck beim Montieren der Trägerteile 6, 8, 12 und 14 können die Holme folglich derart montiert werden, dass zusätzliches Befestigungsmaterial wie Schrauben zur Fixierung der Holme nicht von Nöten ist, die Holme aber dennoch ausreichend gegen Verschieben oder Verrutschen gesichert sind. Denkbar wäre auch, die Innenseite der Aufnahmen 20, 22, 24, 26, 28, 30, 32 und 34 beispielsweise mit einer rauen Struktur auszubilden, um die Reibung zu erhöhen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Chassis für einen Fluggastsitz für ein Flugzeug, umfassend:
zumindest zwei erste Seitenteile (2),
einen ersten Holm (16) und
einen zweiten Holm (18);
wobei der erste und der zweite Holm (16, 18) im Wesentlichen horizontal zwischen den zumindest zwei ersten Seitenteilen (2) angeordnet ist;
wobei der zweite Holm (18) im Fußbereich des Flugzeugsitzes ausgebildet ist, um eine Gepäcksicherung zu gewährleisten;
wobei der erste und der zweite Holm (16, 18) eine Halterung zur Stabilisierung der zumindest beiden ersten Seitenteile (2) ausbildet;
**dadurch gekennzeichnet, dass** die zumindest zwei ersten Seitenteile (2) aus einem hinteren Trägerteil (8) und einem vorderen Trägerteil (6) gestaltet sind; und
zwischen den hinteren (8) und vorderen Trägerteilen (6) Aufnahmen (20, 22, 24, 26) für den ersten (16) und zweiten (18) Holm ausgebildet sind.

2. Chassis für einen Fluggastsitz nach Anspruch 1,
umfassend zumindest ein zweites Seitenteil (10).

3. Chassis für einen Fluggastsitz nach einem der Ansprüche 1 oder 2,
wobei der erste Holm (16) zur Lagerung einer Sitzfläche ausgestaltet ist.

4. Chassis für einen Fluggastsitz nach einem der Ansprüche 1 bis 3,
wobei zumindest ein Anschlag zur Lagerung einer Sitzfläche vorgesehen ist.

5. Chassis für einen Fluggastsitz nach einem der Ansprüche 1 bis 4,
wobei der zweite Holm (18) als Fußstütze ausgebildet ist.

6. Chassis für einen Fluggastsitz nach einem der Ansprüche 2 bis 5,
wobei das zweite Seitenteil (10) aus einem hinteren Trägerteil (14) und einem vorderen Trägerteil (12) gestaltet ist; und
wobei zwischen den hinteren (14) und vorderen Trägerteilen (12) Aufnahmen (28, 30, 32,34) für den ersten (16) und zweiten (18) Holm ausgebildet sind.

7. Sitzgruppe für ein Luftfahrzeug umfassend:
zumindest zwei Sitze (48);
zumindest zwei erste Seitenteile (2);
zumindest einen ersten Holm (16) und einen zweiten Holm (18);
wobei der erste (16) und der zweite Holm (18) im Wesentlichen horizontal zwischen den zumindest zwei ersten Seitenteilen (2) angeordnet ist;
wobei der zweite Holm (18) im Fußbereich der Sitzgruppe ausgebildet ist, um eine Gepäcksicherung zu gewährleisten; und
wobei der erste (16) und der zweite (18) Holm die zumindest zwei ersten Seitenteile (2) stabilisieren;
**dadurch gekennzeichnet, dass** die zumindest zwei ersten Seitenteile (2) aus einem hinteren Trägerteil (8) und einem vorderen Trägerteil (6) gestaltet sind; und
zwischen den hinteren (8) und vorderen Trägerteilen (6) Aufnahmen (20, 22, 24, 26) für den ersten (16) und zweiten (18) Holm ausgebildet sind.

8. Flugzeug mit zumindest einem Chassis für einen Fluggastsitz nach Ansprüchen 1 bis 6 oder mit zumindest einer Sitzgruppe nach Anspruch 7.

9. Verfahren zur Herstellung eines Chassis für einen Fluggastsitz, wobei das Chassis umfasst:
zumindest ein erstes hinteres Trägerteil (8) umfassend eine erste und zweite Aufnahme (20, 22);
zumindest ein erstes vorderes Trägerteil (6) umfassend eine dritte und vierte Aufnahme (24, 26);
zumindest ein zweites hinteres Trägerteil (14) umfassend eine fünfte und sechste Aufnahme (28, 30);
zumindest ein zweites vorderes Trägerteil (12) umfassend eine siebte und achte Aufnahme (32, 34);
einen ersten Holm (16);
einen zweiten Holm (18);
**dadurch gekennzeichnet, dass** das Verfahren die folgenden Schritte umfasst:
Vorpositionieren des ersten Holms in der ersten und fünften Aufnahme; Vorpositionieren des zweiten Holms in der zweiten und sechsten Aufnahme; und
Fixieren des ersten und zweiten Holmes mit dem ersten und zweiten vorderen
Trägerteil auf dem ersten und zweiten hinteren Trägerteil.

## Claims

1. Chassis for an aircraft passenger seat for an aircraft, comprising:
at least two first side parts (2),
a first bar (16) and
a second bar (18),
wherein the first and the second bar (16, 18) are arranged substantially horizontally between the at least two first side parts (2),
wherein the second bar (18) is arranged in the foot region of the aircraft seat to ensure luggage security,
wherein the first and the second bar (16, 18) form a holder for stabilising the at least two first side parts (2),
**characterised in that** the at least two first side parts (2) are formed from a rear carrier part (8) and a front carrier part (6) and
receptacles (20, 22, 24, 26) for the first (16) and second (18) bar are arranged between the rear (8) and front carrier parts (6).

2. Chassis for an aircraft passenger seat according to claim 1,
comprising at least one second side part (10).

3. Chassis for an aircraft passenger seat according to claim 1 or claim 2,
wherein the first bar (16) is embodied for mounting a seating surface.

4. Chassis for an aircraft passenger seat according to any one of claims 1 to 3, wherein at least one stop for mounting a seating surface is provided.

5. Chassis for an aircraft passenger seat according to any one of claims 1 to 4, wherein the second bar (18) is embodied as a foot support.

6. Chassis for an aircraft passenger seat according to any one of claims 2 to 5,
wherein the second side part (10) is made of a rear carrier part (14) and a front carrier part 12) and
wherein receptacles (28, 30, 32, 34) are arranged between the rear (14) and front carrier parts (12) for the first (16) and second (18) bar.

7. Seat group for an aircraft comprising:
at least two seats (48),
at least two first side parts (2),
at least one first bar (16) and one second bar (18),
wherein the first (16) and the second bar (18) are arranged substantially horizontally between the at least two first side parts (2),
wherein the second bar (18) is arranged in the foot region of the seat group, to ensure luggage security and
wherein the first (16) and the second (18) bar stabilise the at least two first side parts (2),
**characterised in that** the at least two first side parts (2) are formed from a rear carrier part (8) and a front carrier part (6) and
receptacles (20, 22, 24, 26) for the first (16) and second (18) bar are arranged between the rear (8) and front carrier parts (6).

8. Aircraft with at least one chassis for an aircraft passenger seat according to claims 1 to 6 or with at least one seat group according to claim 7.

9. Method for manufacturing a chassis for an aircraft passenger seat, wherein the chassis comprises:
at least one first rear carrier part (8) comprising a first and second receptacle (20, 22), at least one first front carrier part (6) comprising a third and fourth receptacle (24, 26), at least one second rear carrier part (14) comprising a fifth and sixth receptacle (28, 30),
at least one second front carrier part (12) comprising a seventh and eighth receptacle (32, 34),
a first bar (16),
a second bar (18),
**characterised in that** the method comprises the following steps:
prepositioning of the first bar in the first and fifth receptacle,
prepositioning of the second bar in the second and sixth receptacle and
fixing of the first and second bar with the first and second front carrier part on the first and second rear carrier part.

## Revendications

1. Châssis pour un siège de passager d'avion, comprenant:
au moins deux premières parties latérales (2),
une première barre (16) et
une deuxième barre (18);
dans lequel les première et deuxième barres (16, 18) sont disposées essentiellement à l'horizontale entre les au moins deux premières parties latérales (2);
dans lequel la deuxième barre (18) est réalisée dans la zone des pieds du siège d'avion, pour assurer une retenue pour bagages;
dans lequel les première et deuxième barres (16, 18) forment une fixation pour stabiliser les aux moins deux premières parties latérales (2);
**caractérisé en ce que** les au moins deux premières parties latérales (2) sont constituées d'une partie support arrière (8) et d'une partie support avant (6); et des logements (20, 22, 24, 26) pour les première (16) et deuxième barres (18) sont réalisées entre les parties support arrière (8) et avant (6).

2. Châssis pour un siège de passager d'avion selon la revendication 1,
comprenant au moins une deuxième partie latérale (10).

3. Châssis pour un siège de passager d'avion selon la revendication 1 ou 2,
dans lequel la première barre (16) est réalisée pour supporter une assise.

4. Châssis pour un siège de passager d'avion selon l'une des revendications 1 à 3,
dans lequel au moins une butée est prévue pour supporter une assise.

5. Châssis pour un siège de passager d'avion selon l'une des revendications 1 à 4,
dans lequel la deuxième barre (18) est réalisée comme repose-pieds.

6. Châssis pour un siège de passager d'avion selon l'une des revendications 2 à 5,
dans lequel la deuxième partie latérale (10) est constituée d'une partie support arrière (14) et d'une partie support avant (12); et
dans lequel des logements (28, 30, 32, 34) pour la première (16) et deuxième (18) barres sont réalisées entre les parties support arrière (14) et avant (12).

7. Groupe de sièges pour un aéronef comprenant :
au moins deux sièges (48);
au moins deux premières parties latérales (2);
au moins une première barre (16) et une deuxième barre (18);
dans lequel les première (16) et deuxième barre (18) sont disposées essentiellement à l'horizontale entre les deux premières parties latérales (2);
dans lequel la deuxième barre (18) est réalisé dans la zone des pieds du groupe de sièges, pour assurer une retenue pour bagages; et
dans lequel les première (16) et deuxième (18) barres stabilisent les au moins deux premières parties latérales (2);
**caractérisé en ce que** les au moins deux premières parties latérales (2) sont constituées d'une partie support arrière (8) et d'une partie support avant (6); et
des logements (20, 22, 24, 26) pour les première (16) et deuxième barres (18) sont réalisés entre les parties support arrière (8) et avant (6).

8. Avion comportant au moins un châssis pour un siège de passager d'avion selon l'une des revendications 1 à 6 ou au moins un groupe de sièges selon la revendication 7.

9. Procédé de fabrication d'un châssis pour un siège de passager d'avion, dans lequel le châssis comprend:
au moins une première partie support arrière (8) comprenant un premier et un deuxième logements (20, 22);
au moins une première partie support avant (6) comprenant un troisième et un quatrième logements (24, 26);
au moins une deuxième partie support arrière (14) comprenant un cinquième et un sixième logements (28, 30);
au moins une deuxième partie support avant (12) comprenant un septième et un huitième logements (24, 26);
une première barre (16);
une deuxième barre (18);
**caractérisé en ce que** le procédé comprend les étapes suivantes:
prépositionnement de la première barre dans le premier et le cinquième logements;
prépositionnement de la deuxième barre dans le deuxième et le sixième logements; et
fixation des première et deuxième barres avec la première et la deuxième parties support avant sur la première et la deuxième parties support arrière.
